# DEMANDE DE BREVET EUROPEEN

(11) **EP 4 080 331 A1**
(43) Date de publication de la demande: **26.10.2022**
(21) Numéro de dépôt: 21305516.3
(22) Date de dépôt: 19.04.2021
(51) Int. Cl.: G06F 3/01, G02B 27/00, G06T 7/246

(54) **CASQUE**

(71) Demandeur: DYNAMIXYZ, 35510 Cesson-Sévigné (FR)
(72) Inventeur: STOIBER, Nicolas, 35200 Rennes (FR)
(74) Mandataire: HGF

(57) **Abrégé**

L'invention se rapporte à un dispositif (1) de capture d'image monté sur la tête pour capturer le mouvement facial d'un utilisateur. Le dispositif (1) comprend un casque (2) avec des parties latérales (5), chacune étant destinée à reposer sur les côtés de la tête d'un utilisateur. Chaque partie latérale (5) comprend une branche (6) sur laquelle est montée une caméra respective (7). Chaque caméra (7) est positionnée latéralement par rapport au visage de l'utilisateur pour capturer des données d'image relatives à un côté respectif du visage de l'utilisateur.

## Description

La présente invention concerne généralement les casques, en particulier les casques adaptables. Plus spécifiquement, bien que non exclusivement, cette invention concerne un casque adaptable destiné à supporter un équipement de capture d'images pour capturer les mouvements du visage d'un utilisateur.

La capture de mouvements faciaux est le processus de conversion des mouvements du visage d'un acteur en une base de données numérique à l'aide d'un équipement de capture d'images et/ou de scanners laser. Cette base de données peut ensuite être utilisée pour produire des graphiques informatiques, des animations informatiques pour des films, des jeux ou des avatars en temps réel. Ce procédé permet d'obtenir une animation de personnage informatique plus réaliste et plus nuancée, car le mouvement du personnage infographique est dérivé des mouvements d'une personne réelle.

Une base de données de capture de mouvements faciaux décrit les coordonnées de points de référence sur le visage de l'acteur. La capture peut se faire en deux ou trois dimensions. La capture en deux dimensions peut être réalisée à l'aide d'une seule caméra et d'un logiciel de capture. Cela produit un suivi moins sophistiqué et ne permet pas de capturer des mouvements entièrement tridimensionnels, comme la rotation de la tête. La capture tridimensionnelle est réalisée à l'aide d'appareils à caméras multiples ou de systèmes de marquage laser. Ces systèmes sont beaucoup plus coûteux et compliqués à utiliser.

EP2340646A1 décrit un système de caméras montées sur la tête qui permet de capturer les mouvements du visage d'un acteur séparément, mais simultanément avec les mouvements du corps de l'acteur. Plusieurs caméras sont montées sur un casque porté par l'acteur via une paire de tiges montées de manière rotative sur le casque.

Les systèmes connus de caméras montées sur la tête interfèrent souvent avec la performance de l'acteur, en raison de la présence du dispositif devant le visage de l'acteur.

Il serait donc avantageux de fournir un casque adaptable pour supporter l'équipement de capture d'image pour capturer le mouvement facial, qui atténue les problèmes avec les systèmes connus.

L'invention concerne un dispositif de capture d'image monté sur la tête pour capturer le mouvement facial d'un utilisateur, le dispositif comprenant un casque et une paire de caméras opposées, caractérisé en ce que chaque caméra est positionnée latéralement par rapport au visage d'un utilisateur pour capturer des données d'image relatives à un côté respectif du visage de l'utilisateur.

Bien entendu, le dispositif selon l'invention peut comprendre plus de deux caméras et par exemple, il peut comprendre deux paires de caméras, chaque paire étant positionnée latéralement par rapport au visage d'un utilisateur pour capturer des données d'image relatives à un côté respectif du visage de l'utilisateur.

Le dispositif peut comprendre un plan central, qui peut segmenter les côtés latéraux du dispositif. La ou au moins une ou chaque caméra peut être orientée de sorte que l'angle entre son plan image et le plan central soit inférieur à 45 degrés, par exemple inférieur à 30 degrés et de préférence inférieur à 20 degrés.

La ou chaque caméra peut être configurée pour être sensiblement alignée avec le nez de l'utilisateur.

La ou chaque caméra peut comprendre une caméra vidéo et/ou peut être configurée pour capturer des données numériques représentatives d'une ou plusieurs images. Le dispositif peut comprendre une mémoire ou un dispositif de mémoire, par exemple pour enregistrer les données capturées par la ou les caméras.

Le dispositif peut comprendre un processeur, qui peut être connecté, par exemple de manière opérationnelle, à la mémoire.

Le processeur peut être configuré pour reconstruire, en cours d'utilisation, au moins une partie du visage de l'utilisateur, par exemple sur la base de données acquises à partir d'au moins une caméra, de préférence les deux caméras et plus préférablement seulement les deux caméras. Le processeur peut être configuré pour reconstruire au moins une partie du visage de l'utilisateur en utilisant un réseau neuronal. La mémoire peut comprendre un élément de programme informatique stocké sur celle-ci, qui peut comprendre un moyen de code de programme lisible par ordinateur pour amener le processeur à exécuter une procédure pour reconstruire au moins une partie du visage de l'utilisateur, par exemple sur la base de données acquises à partir d'au moins une caméra, de préférence des deux caméras et plus préférablement seulement des deux caméras.

Le processeur peut être configuré pour assembler, en cours d'utilisation, des données d'image acquises à partir d'au moins une caméra, de préférence des deux caméras et de préférence seulement des deux caméras, par exemple pour reconstruire au moins une partie du visage de l'utilisateur. Le processeur peut être configuré pour assembler les données d'image à l'aide d'un réseau neuronal. La mémoire peut comprendre un élément de programme informatique stocké sur celle-ci, qui peut comprendre un moyen de code de programme lisible par ordinateur pour amener le processeur à exécuter une procédure pour assembler des données d'image acquises à partir d'au moins une caméra, de préférence les deux caméras et plus préférablement seulement les deux caméras, par exemple pour reconstruire au moins une partie du visage de l'utilisateur.

Le processeur peut servir à commander le fonctionnement de la ou des caméras et/ou de la mémoire. Le dispositif peut comprendre un ou plusieurs éléments ou dispositifs d'éclairage, par exemple pour éclairer le visage d'un utilisateur. Le processeur peut être utilisé pour commander le(s) élément(s) ou dispositif(s) d'éclairage.

Le casque peut comprendre une partie avant, par exemple destinée à reposer sur le front de l'utilisateur. Le casque peut comprendre une partie arrière, par exemple destinée à reposer sur l'arrière de la tête de l'utilisateur. Le casque peut comprendre au moins deux parties latérales, par exemple chacune destinée à reposer sur les côtés de la tête de l'utilisateur.

Le dispositif peut comprendre une branche, par exemple sur laquelle est montée l'une des caméras. La branche peut être montée sur l'une des parties latérales. Dans certains exemples, le dispositif peut comprendre plus d'une branche, par exemple une branche montée et/ou connectée à chaque partie latérale. Dans certains exemples, chaque partie latérale peut comprendre une branche sur laquelle est montée l'une des caméras.

Le dispositif peut comprendre une structure articulée reliant la partie avant à la partie arrière pour se rapprocher du profil de la tête de l'utilisateur.

La structure articulée peut comprendre au moins deux éléments, par exemple une pluralité d'éléments. Les éléments peuvent être connectés ou reliés entre eux, par exemple de manière pivotante et/ou en série. Les éléments peuvent être connectés ou reliés entre eux par des attaches ou des fixations. Les attaches ou les fixations peuvent permettre de régler ou d'ajuster la position angulaire des éléments les uns par rapport aux autres.

Le dispositif peut comprendre un coussin. Le coussin peut s'étendre le long d'au moins une partie de la structure articulée. Le coussin peut être monté sur un ou plusieurs ou sur chacun des éléments, par exemple pour supporter la structure articulée sur la tête de l'utilisateur.

Au moins un ou chaque élément peut comprendre un élément de support de coussin sur lequel le coussin peut être monté. Le ou chaque ou au moins un des éléments de support de coussin peut comprendre ou être une plaque de support de coussin.

Une extrémité, par exemple une première extrémité, du coussin peut être montée sur la partie avant. Une extrémité, par exemple une seconde extrémité, du coussin peut être montée sur la partie arrière.

Le coussin peut comprendre ou contenir une substance flexible, telle qu'une mousse.

La partie arrière peut comprendre une sangle ou un cordon. La sangle ou le cordon de la partie arrière peut être connecté ou relié à au moins une ou à chaque partie latérale. La sangle ou le cordon de la partie arrière peut être élastique. La partie arrière peut comprendre au moins une fente de verrouillage. La fente de verrouillage peut servir à retenir de manière amovible une partie de la sangle ou du cordon élastique, par exemple pour permettre le réglage de sa longueur.

Le dispositif peut comprendre une partie supérieure, par exemple destinée à reposer sur le dessus de la tête de l'utilisateur. La partie supérieure peut comprendre un moyen de positionnement, par exemple pour positionner la structure articulée par rapport à la partie supérieure. Le moyen de positionnement peut comprendre un évidement, une découpe ou un réceptacle, par exemple pour recevoir une partie de la structure articulée, ou à l'intérieur duquel la structure articulée est reçue.

La partie supérieure peut comprendre une sangle ou un cordon. La sangle ou le cordon de la partie supérieure peut être connecté ou relié à au moins une ou à chaque partie latérale. La sangle ou le cordon de la partie supérieure peut avoir une longueur réglable. Au moins une ou chaque extrémité de la sangle ou du cordon de la partie supérieure peut être fixée ou fixable à l'une des parties latérales.

Au moins une ou chaque extrémité de la sangle ou du cordon de la partie supérieure peut être fixée de manière amovible à l'une des parties latérales, par exemple pour permettre le réglage de sa longueur. La ou chaque extrémité de la sangle ou du cordon de la partie supérieure peut être fixée de manière amovible à l'une des parties latérales par un dispositif de fixation, par exemple un dispositif de fixation fileté. La partie supérieure peut comprendre au moins une fente, par exemple sur au moins une partie de sa longueur. La partie supérieure peut comprendre une fente adjacente à la ou à chacune de ses extrémités à travers laquelle s'étend l'attache, par exemple pour permettre d'ajuster la longueur de la sangle ou du cordon.

La partie avant peut comprendre une sangle ou un cordon. La sangle ou le cordon de la partie avant peut être connecté ou relié à au moins une ou chaque partie latérale. La sangle ou le cordon de la partie avant peut avoir une longueur réglable. Au moins une ou chaque extrémité de la sangle ou du cordon de la partie avant peut être fixée ou fixable à l'une des parties latérales.

Au moins une ou chaque extrémité de la sangle ou du cordon de la partie avant peut être fixée de manière amovible à l'une des parties latérales, par exemple pour permettre le réglage de sa longueur. La ou chaque extrémité de la sangle ou du cordon de la partie avant peut être fixée de manière amovible à l'une des parties latérales par un dispositif de fixation, par exemple un dispositif de fixation fileté.

Au moins une ou chaque branche peut être mobile, par exemple rotative, par rapport à la partie latérale. Au moins une ou chaque partie latérale et/ou au moins une ou chaque branche peut comprendre au moins un indicateur visuel, par exemple pour déterminer l'orientation de la branche.

Au moins une ou chaque branche peut être mobile, par exemple rotative, par rapport à la partie latérale. Au moins une ou chaque partie latérale et/ou au moins une ou chaque branche peut comprendre au moins un indicateur visuel, par exemple pour déterminer l'orientation de la branche.

Pour éviter tout doute, toutes les caractéristiques décrites ici s'appliquent également à tout aspect de l'invention.

L'invention fournit également un élément de programme informatique comprenant des moyens de code de programme lisibles par ordinateur pour amener un processeur à exécuter une procédure pour reconstruire, en cours d'utilisation, au moins une partie du visage de l'utilisateur, par exemple sur la base de données acquises à partir d'au moins une caméra, de préférence les deux caméras et plus préférablement seulement les deux caméras.

L'invention fournit également un procédé, par exemple un procédé mis en oeuvre par ordinateur, de reconstruction d'au moins une partie du visage d'un utilisateur, par exemple sur la base de données acquises à partir d'au moins une caméra, de préférence deux caméras et plus préférablement seulement deux caméras.

L'invention fournit également un élément de programme informatique comprenant un moyen de code de programme lisible par ordinateur pour amener un processeur à exécuter une procédure pour assembler, en cours d'utilisation, des données d'image acquises à partir d'au moins une caméra, de préférence des deux caméras et plus préférentiellement seulement des deux caméras, par exemple pour reconstruire au moins une partie du visage de l'utilisateur.

L'invention fournit également un procédé, par exemple un procédé mis en œuvre par ordinateur, d'assemblage de données d'image acquises à partir d'au moins une caméra, de préférence deux caméras et plus préférablement seulement deux caméras, par exemple pour reconstruire au moins une partie du visage de l'utilisateur.

Le procédé ou la méthode peut comprendre la reconstruction d'au moins une partie du visage de l'utilisateur en utilisant un réseau neuronal. La procédure ou le procédé peut comprendre l'assemblage des données d'image à l'aide d'un réseau neuronal.

La procédure ou le procédé peut comprendre l'utilisation d'au moins une caméra positionnée latéralement par rapport au visage de l'utilisateur. Les données d'image capturées par la ou les caméras peuvent se rapporter à un côté, par exemple un côté respectif, du visage de l'utilisateur.

La partie reconstruite du visage de l'utilisateur peut comprendre une partie frontale. La procédure ou le procédé peut comprendre l'affichage d'une représentation de l'avant du visage de l'utilisateur. La procédure ou le procédé peut comprendre l'affichage de données d'image, par exemple sous forme de vidéo, de la représentation de l'avant du visage de l'utilisateur.

Le procédé ou la méthode peut comprendre la vérification des données d'image capturées, par exemple en utilisant la partie reconstruite du visage de l'utilisateur et/ou en utilisant les données d'image affichées.

L'invention fournit également un élément de programme informatique comprenant un moyen de code de programme lisible par ordinateur pour amener un processeur à exécuter une procédure pour mettre en oeuvre une ou plusieurs étapes de la méthode susmentionnée.

L'invention fournit également l'élément de programme informatique incorporé sur un support lisible par ordinateur.

L'invention fournit également un support lisible par ordinateur sur lequel est stocké un programme, où le programme est conçu pour qu'un ordinateur exécute une procédure pour reconstruire, en cours d'utilisation, au moins une partie du visage de l'utilisateur, par exemple sur la base de données acquises à partir d'au moins une caméra, de préférence les deux caméras et plus préférablement seulement les deux caméras.

L'invention fournit également un support lisible par ordinateur sur lequel est stocké un programme, où le programme est agencé pour qu'un ordinateur exécute une procédure pour assembler, en cours d'utilisation, des données d'image acquises à partir d'au moins une caméra, de préférence les deux caméras et plus préférentiellement seulement les deux caméras, par exemple pour reconstruire au moins une partie du visage de l'utilisateur.

L'invention fournit également un moyen de commande ou un système de commande ou un contrôleur comprenant l'élément de programme informatique ou le support lisible par ordinateur susmentionné.

Dans le cadre de la présente demande, il est expressément prévu que les divers aspects, modes de réalisation, exemples et alternatives exposés dans les paragraphes précédents, dans les revendications et/ou dans la description et les dessins suivants, et en particulier les caractéristiques individuelles de ceux-ci, peuvent être pris indépendamment ou dans n'importe quelle combinaison. En d'autres termes, tous les modes de réalisation et/ou les caractéristiques de tout mode de réalisation peuvent être combinés de n'importe quelle manière, à moins que ces caractéristiques ne soient incompatibles.

Pour éviter toute ambiguïté, les termes "peut", "et/ou", "par exemple", "par exemple" et tout autre terme similaire utilisés dans le présent document doivent être interprétés comme non limitatifs, de sorte que toute caractéristique ainsi décrite ne doit pas nécessairement être présente. En effet, toute combinaison de caractéristiques optionnelles est expressément envisagée sans s'écarter de la portée de l'invention, que celles-ci soient ou non expressément revendiquées. Le demandeur se réserve le droit de modifier toute revendication déposée à l'origine ou de déposer toute nouvelle revendication en conséquence, y compris le droit de modifier toute revendication déposée à l'origine pour qu'elle dépende de et/ou incorpore toute caractéristique de toute autre revendication bien qu'elle ne soit pas revendiquée à l'origine de cette manière.

Des modes de réalisation de l'invention seront maintenant décrits à titre d'exemple uniquement en référence aux dessins ci-joints dans lesquels :
La figure 1 est une vue schématique d'un dispositif de capture d'images monté sur la tête selon un premier exemple ;
La figure 2 est une vue latérale d'un dispositif de capture d'images monté sur la tête selon un deuxième exemple ;
La figure 3 est une vue de dessus du dispositif de la figure 2 ;
La figure 4 est une vue arrière du dispositif des figures 2 et 3 ;
La figure 5 est une vue arrière supérieure du dispositif des figures 2 à 4 ;
La figure 6 est une vue latérale similaire à celle de la figure 2 avec le dispositif monté sur la tête d'un utilisateur.

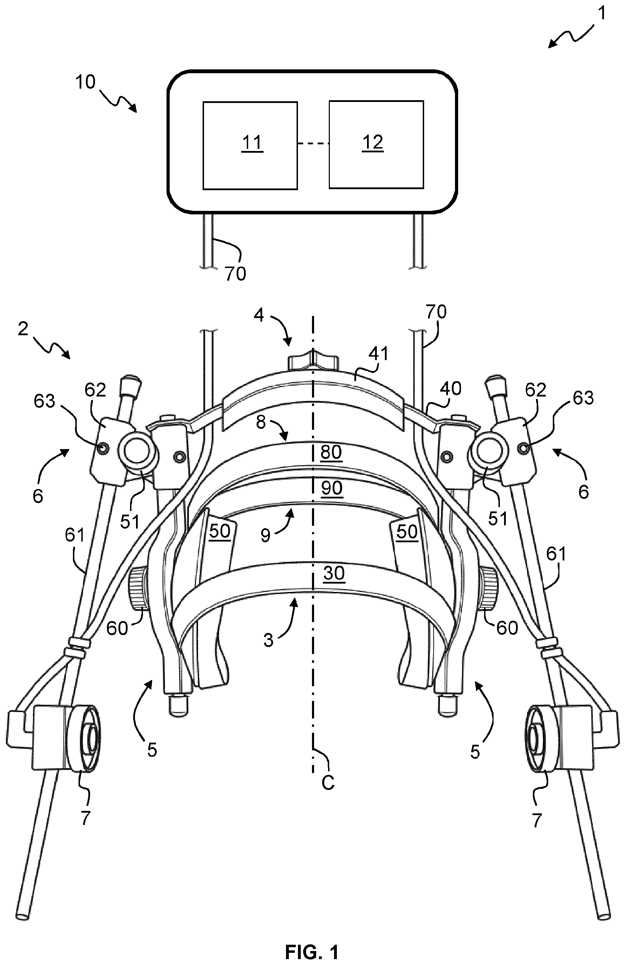

En se référant maintenant à la figure 1, on voit un dispositif 1 de capture d'images monté sur la tête pour capturer le mouvement facial d'un utilisateur selon un premier exemple. Dans cet exemple, le dispositif 1 comprend un contrôleur 10 et un casque 2. Le casque 2 comprend une partie avant 3 destinée à reposer sur le front de l'utilisateur, une partie arrière 4 destinée à reposer sur l'arrière de la tête de l'utilisateur et une paire de parties latérales 5, chacune destinée à reposer sur les côtés de la tête de l'utilisateur. Chaque partie latérale 5 comprend une branche 6 sur laquelle est montée une caméra 7.

Le dispositif 1 comprend également une partie supérieure 8 destinée à être posée sur le dessus de la tête de l'utilisateur et une partie cou 9 destinée à être posée sur l'arrière du cou de l'utilisateur. La partie avant 3, la partie supérieure 8 et la partie cou 9 sont chacune pourvues de sangles 30, 80, 90 dans cet exemple, qui sont reliées de manière amovible à une partie latérale 5 respective à chacune de leurs extrémités pour permettre le réglage de leur longueur de manière classique. De même, la partie dorsale 4 comprend dans cet exemple une sangle en plastique semi-rigide 40 avec un mécanisme à crémaillère 41 pour le réglage de sa longueur.

Chaque partie latérale 5 comprend un coussin 50, qui est rempli de mousse dans cet exemple. Chaque branche 6 est réglable en pivotement par rapport à l'une des parties latérales 5, à l'aide d'un bouton de réglage 60. Chaque branche comprend également une tige 61 sur laquelle une caméra 7 respective est montée de manière réglable. Dans cet exemple, l'orientation de la caméra 7 par rapport à la tige 61 est fixe, mais elle peut glisser sur la longueur de la tige 61. Toutefois, il est envisagé que l'orientation de la caméra 7 puisse également être réglable dans d'autres exemples.

La tige 61 est fixée de manière amovible à l'intérieur d'une pince 62, qui est montée de manière pivotante sur une partie latérale 5 respective par une connexion pivotante 51. La pince 62 comprend une vis 63 utilisée pour fixer de manière amovible la tige 61 dans l'une quelconque d'une pluralité de positions sur sa longueur. La connexion pivotante 51 permet de régler l'orientation de la pince 61 par rapport à la partie latérale 5, permettant ainsi de rapprocher ou d'éloigner les caméras 7 du visage de l'utilisateur. Cependant, la connexion pivotante 51 a une tension prédéterminée pour empêcher le réglage par inadvertance de l'orientation de la pince 61.

Comme illustré sur la figure 1, les caméras 7 se font face et s'opposent directement à un emplacement destiné à être sensiblement aligné avec les joues et/ou le nez d'un utilisateur (non représenté) portant le dispositif 1. Ainsi, ces caméras 7 sont positionnées latéralement par rapport au visage de l'utilisateur pour capturer des données d'image relatives à un côté respectif du visage de l'utilisateur.

Dans cet exemple, les caméras 7 sont dirigées directement l'une vers l'autre. En d'autres termes, chaque caméra 7 est orientée de manière que son plan image soit parallèle à un plan central C segmentant les côtés latéraux du dispositif 1. Toutefois, il est envisagé que les caméras 7 soient orientées selon un angle par rapport sur le plan central.

Le contrôleur 10 comprend une mémoire 11 et un processeur 12 relié fonctionnellement à la mémoire 11. Chaque caméra 7 est reliée au contrôleur 10 par un câble respectif 70. Le contrôleur 10 est configuré pour recevoir des données d'image de la caméra 7 et pour les stocker sur la mémoire 11. Le processeur 12 est configuré pour reconstruire au moins une partie du visage de l'utilisateur sur la base des données acquises par les deux caméras 7. Plus précisément, le processeur 12 est configuré pour assembler les données d'image acquises par les deux caméras 7, afin de créer une représentation numérique du visage de l'utilisateur.

Les dispositifs connus de capture d'image montés sur la tête pour capturer le mouvement facial d'un utilisateur utilisent normalement au moins 3 caméras, et obstruent généralement la vue de l'utilisateur. La présente invention atténue ce problème en utilisant une paire de caméras 7 positionnées latéralement par rapport au visage de l'utilisateur, et en reconstruisant le visage de l'utilisateur pour générer une représentation numérique à partir de ces deux caméras latérales 7 uniquement. La reconstruction est de préférence effectuée à l'aide d'un réseau neuronal.

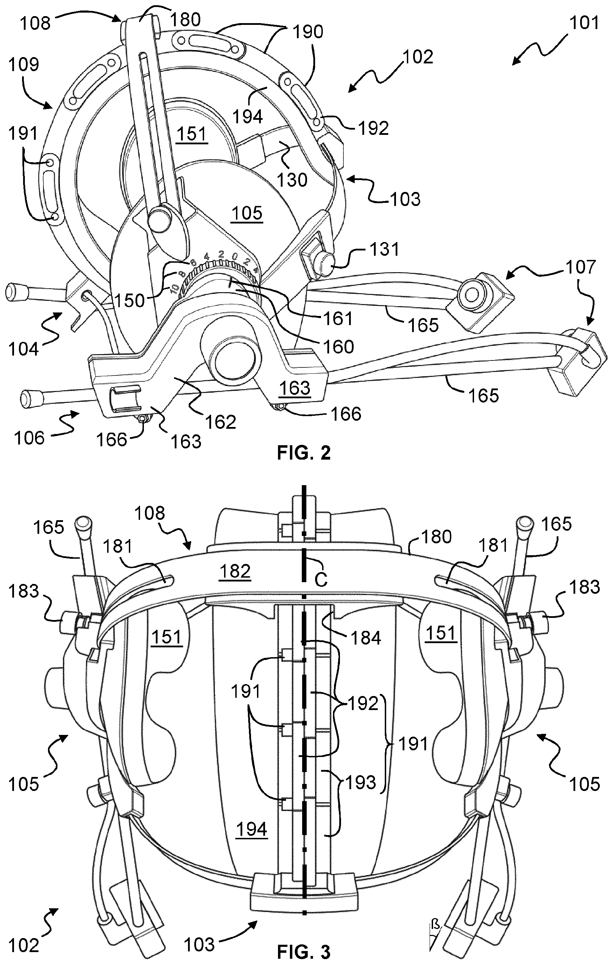

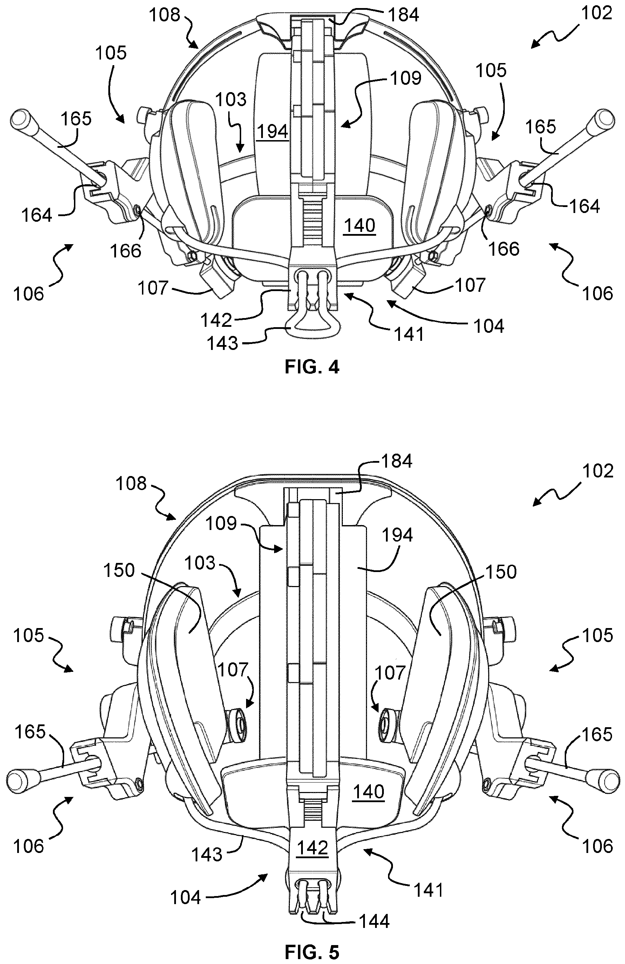

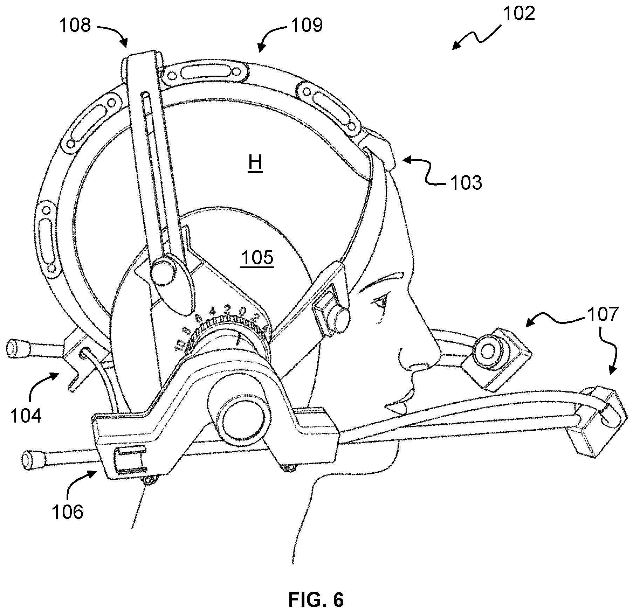

Les figures 2 à 6 montrent un dispositif 101 de capture d'images monté sur la tête pour capturer le mouvement facial d'un utilisateur selon un deuxième exemple. Le dispositif 101 dans cet exemple comprend un casque 102 avec une partie avant 103 destinée à reposer sur le front de l'utilisateur, une partie arrière 104 destinée à reposer sur l'arrière de la tête de l'utilisateur et une paire de parties latérales 105, chacun destiné à reposer sur les côtés de la tête de l'utilisateur. Chaque partie latérale 105 comprend une branche 106 sur laquelle est montée une caméra 107. Le dispositif 101 comprend également une partie supérieure 108 destinée à reposer sur le dessus de la tête H de l'utilisateur et une structure articulée 109 reliant la partie avant 103 à la partie arrière 104 pour se rapprocher du profil de la tête de l'utilisateur.

Dans cet exemple, la partie avant 103 comprend une sangle en plastique semi-rigide 130. Chaque extrémité de la sangle 130 est fixée de manière amovible à l'une des parties latérales 105 respectifs par une pince 131 pour permettre le réglage de sa longueur.

La partie arrière 104 comprend une plaque de support de coussin 140 et un mécanisme de réglage 141 fixé à la face arrière de la plaque de support de coussin 140. Le mécanisme de réglage 141 comprend un élément de verrouillage 142 qui peut être rapproché et éloigné par paliers de la structure articulée 109. La partie arrière 104 comprend également un cordon élastique 143 fixé à chaque extrémité à l'une des parties latérales 105 respectives. Le cordon élastique 143 s'étend également à travers une paire de trous dans l'élément de verrouillage 142 pour former une boucle. L'élément de verrouillage 142 comprend une paire de fentes de verrouillage 144 ayant une partie rétrécie pour retenir de manière amovible les parties respectives du cordon élastique 143 afin de permettre le réglage de sa longueur effective.

Chaque partie latérale 105 comprend une série d'indicateurs visuels 150, sous forme de chiffres dans cet exemple. Chaque branche 106 comprend un moyeu 160 avec un indicateur visuel 161, sous la forme d'une ligne, qui coopère avec les indicateurs visuels 150 de la partie latérale 105 sur lequel il est monté, pour fournir une indication de l'orientation de la branche 106. Ceci facilite la configuration du casque 102, et permet également de synchroniser l'orientation des branches 106 de manière simple. Chaque partie latérale 105 comprend également un coussin 151, qui est rempli de mousse dans cet exemple.

Chaque branche 106 comprend également une paire de jambes 162 qui divergent l'une de l'autre selon un angle oblique. Les jambes 162 ont des pieds respectifs 163 qui sont coaxiaux l'un à l'autre, mais qui s'étendent à l'écart l'un de l'autre. Chaque pied 163 comprend un trou 164 s'étendant sur sa longueur à travers lequel s'étend une tige 165 de la branche 106. Chaque jambe 162 est formée de deux parties, qui peuvent être serrées ou desserrées par des boulons 166 et forment ensemble une pince pour fixer de manière amovible la tige 165 en position.

L'une des caméras 107 est montée à l'extrémité de chaque tige 165 et est orientée vers l'intérieur, vers l'autre caméra 107 mais selon un angle par rapport à celle-ci. Plus particulièrement, chaque caméra 107 est orientée de telle sorte que son plan image fait un angle β par rapport à un plan central C segmentant les faces latérales du dispositif 101. Dans cet exemple, l'angle β est d'environ 15 degrés, mais il est envisagé que l'angle puisse être supérieur ou inférieur à cet angle. Par exemple, l'angle peut être de 20 degrés, 30 degrés ou même 45 degrés. De même, l'angle peut être de 10 degrés, 5 degrés ou zéro degré.

La partie supérieure 108 comprend une sangle en plastique semi-rigide 180 avec une paire de fentes 181, dont chacune s'étend à partir d'une extrémité adjacente et se termine au niveau d'une partie centrale 182 de la sangle 180. Chaque côté de la sangle 180 est fixé de manière amovible à l'une des parties latérales 105 respectives par une attache filetée 183 qui s'étend à travers l'une des fentes 181 et serre de manière amovible la sangle 180 en position pour permettre le réglage de sa longueur. La partie supérieure 108 comprend également une fente de positionnement 184 qui reçoit et positionne la structure articulée 109 par rapport à la partie supérieure 108.

La structure articulée 109 comprend une pluralité d'éléments 190 reliés entre eux de manière pivotante en série par des attaches 191, qui permettent d'ajuster la position angulaire des éléments 190 les uns par rapport aux autres. De cette manière, la structure articulée 109 forme une sorte de colonne vertébrale qui s'étend le long du plan central C du casque 102.

Chaque élément 190 comprend une barre courte 192 à extrémités arrondies, traversée par les attaches 191, et une plaque de support de coussin 193. Un coussin 194 est prévu, qui s'étend le long de la structure articulée 109 de la partie avant 103 à la partie arrière 104, pour supporter le casque 102 sur la tête de l'utilisateur. Le coussin 194 est monté à une première de ses extrémités sur la partie avant 103 et à une seconde de ses extrémités sur la plaque de support du coussin 140 de la partie arrière 104. Le coussin 194 est également monté sur la plaque de support du coussin 193 de chaque élément 190 sur sa longueur. Dans cet exemple, le coussin 194 est rempli de mousse.

L'homme du métier appréciera que plusieurs variantes des modes de réalisation précités soient envisageables sans sortir du cadre de l'invention.

## Revendications

1. Dispositif de capture d'image monté sur la tête pour capturer le mouvement facial d'un utilisateur, le dispositif comprenant un casque et une paire de caméras opposés, **caractérisé en ce que** chaque caméra est positionnée latéralement par rapport au visage d'un utilisateur pour capturer des données d'image relatives à un côté respectif du visage de l'utilisateur.

2. Dispositif selon la revendication 1 comprenant un plan central segmentant les côtés latéraux du dispositif, dans lequel chaque caméra est orientée de telle sorte que l'angle entre son plan d'image et le plan central est inférieur à 45 degrés.

3. Dispositif selon la revendication 2, dans lequel chaque caméra est orientée de telle sorte que l'angle entre son plan image et le plan central est inférieur à 30 degrés.

4. Dispositif selon la revendication 3, dans lequel chaque caméra est orientée de telle sorte que l'angle entre son plan d'image et le plan central est inférieur à 20 degrés.

5. Dispositif selon l'une quelconque des revendications précédentes, dans lequel la ou chaque caméra est configurée pour être sensiblement alignée avec les joues et/ou le nez de l'utilisateur.

6. Dispositif selon l'une quelconque des revendications précédentes comprenant une mémoire et un processeur connecté de manière opérationnelle à la mémoire, dans lequel le processeur est configuré pour reconstruire, en cours d'utilisation, au moins une partie du visage de l'utilisateur sur la base de données acquises à partir des deux caméras en utilisant un réseau neuronal.

7. Dispositif selon l'une quelconque des revendications précédentes, le casque comprenant :
une partie avant destinée à reposer sur le front de l'utilisateur ;
une partie arrière destinée à reposer sur l'arrière de la tête de de l'utilisateur ;
et
au moins deux parties latérales, chacune étant destinée à reposer sur un des côtés de la tête de l'utilisateur.

8. Dispositif selon la revendication 7, dans lequel la partie arrière comprend une sangle ou un cordon connecté à chaque partie latérale et ayant une longueur réglable.

9. Dispositif selon la revendication 7 ou la revendication 8 comprenant une partie supérieure destinée à reposer sur le dessus de la tête de l'utilisateur, dans lequel la partie supérieure comprend une sangle ou un cordon connecté à chaque partie latérale et ayant une longueur réglable, chaque extrémité de la sangle ou du cordon de la partie supérieure étant fixée de manière amovible à l'une des parties latérales pour permettre le réglage de sa longueur.

10. Dispositif selon l'une quelconque des revendications 7 à 9, dans lequel la partie avant comprend une sangle ou un cordon connecté à chaque partie latérale et ayant une longueur réglable. , chaque extrémité de la sangle ou du cordon de la partie avant étant fixée de manière amovible à l'une des parties latérales pour permettre le réglage de sa longueur.

11. Dispositif selon l'une quelconque des revendications 7 à 10, dans lequel chaque partie latérale comprend une branche sur lequel est montée l'une des caméras.

12. Dispositif selon la revendication 11, dans lequel chaque branche est rotative par rapport à la partie latérale, chaque partie latérale et/ou branche comprenant au moins un indicateur visuel permettant de déterminer l'orientation de la branche.

13. Le dispositif selon l'une quelconque des revendications 7 à 12 comprenant une structure articulée reliant la partie avant à la partie arrière pour se rapprocher du profil de la tête de l'utilisateur.

14. Procédé mis en oeuvre par ordinateur pour reconstruire au moins une partie du visage d'un utilisateur sur la base de données acquises à partir d'au moins une caméra positionnée latéralement par rapport au visage de l'utilisateur, le procédé comprenant la reconstruction d'au moins une partie avant du visage de l'utilisateur en utilisant un réseau neuronal.

15. Procédé d'assemblage de données d'image acquises à partir d'au moins une caméra positionnée latéralement par rapport au visage de l'utilisateur, le procédé comprenant la reconstruction d'au moins une partie avant du visage de l'utilisateur en utilisant un réseau neuronal.
